Europäisches Patentamt

European Patent Office

Office européen des brevets

(19)

(11) Veröffentlichungsnummer: **0 206 427**
A2

# (12) EUROPÄISCHE PATENTANMELDUNG

(21) Anmeldenummer: 86201089.9

(22) Anmeldetag: 23.06.86

(51) Int. Cl.⁴: **A 23 G 9/12,** F 25 D 3/08

(30) Priorität: 26.06.85 AT 1905/85

(43) Veröffentlichungstag der Anmeldung: 30.12.86
Patentblatt 86/52

(84) Benannte Vertragsstaaten: DE FR GB IT NL SE

(71) Anmelder: N.V. Philips' Gloeilampenfabrieken,
Groenewoudseweg 1, NL-5621 BA Eindhoven (NL)

(72) Erfinder: Meier, Otto, INT. OCTROOIBUREAU B.V. Prof.
Holstlaan 6, NL-5656 AA Eindhoven (NL)
Erfinder: Sadek, Kurt, INT. OCTROOIBUREAU B.V. Prof.
Holstlaan 6, NL-5656 AA Eindhoven (NL)
Erfinder: Sikoronja, Zvonko, INT. OCTROOIBUREAU B.V.
Prof. Holstlaan 6, NL-5656 AA Eindhoven (NL)
Erfinder: Schröder, Johann, INT. OCTROOIBUREAU B.V.
Prof. Holstlaan 6, NL-5656 AA Eindhoven (NL)

(74) Vertreter: Bos, Kornelis Sjoerd et al, INTERNATIONAAL
OCTROOIBUREAU B.V. Prof. Holstlaan 6, NL-5656 AA
Eindhoven (NL)

(54) Scheibenförmige, in eine Speiseeismaschine einlegbare Kältepatrone.

(57) Eine mit einem Latentwärmespeichermittel gefüllte scheibenförmige Kältepatrone, deren eine Scheibenhauptwand (1) zum Zusammenwirken mit einem Schab- und Rührwerkzeug einer Speiseeismaschine dient, ist durch mindestens zwei miteinander verbundene Teile gebildet, von welchen ein Teil aus der dem Schab- und Rührwerkzeug zugewandten Scheibenhauptwand (1) und der andere Teil aus einem wannenförmigen Bodenteil (2) besteht, wobei die zum Zusammenwirken mit dem Schab- und Rührwerkzeug dienende Scheibenhauptwand (1) als formstabiler Druckgussteil und mindestens eine Wandung des Bodenteiles (2) sich selbst der Volumenänderung des Latentwärmespeichermittels beim Phasenübergang reversibel anpassbar ausgebildet ist.

"Scheibenförmige, in eine Speiseeismaschine einlegbare Kältepatrone".

86201089-9

Die Erfindung betrifft eine scheibenförmig, in eine Speiseeismaschine einlegbare Kältepatrone, die mit einem Latentwärmespeichermittel gefüllt ist und deren eine Scheibenhauptwand zum Zusammenwirken mit einem Schab- und Rührwerkzeug der Speiseeismaschine dient. Aus der DE-OS 28 31 592 ist eine als Haushaltgerät dienende Speiseeismaschine bekannt, bei der eine derartige Kältepatrone, die vorzugsweise in einer Meridianebene geteilt sein kann, Verwendung findet, über deren Aufbau aber keine näheren Angaben gemacht sind.

Die Erfindung hat sich zum Ziel gesetzt, eine Kältepatrone der eingangs angeführten Gattung so auszugestalten, dass sie einfach aufgebaut ist und eine einwandfreie Funktionsweise der Speiseeismaschine gewährleistet, so dass Speiseeis einwandfrei und mit guter Qualität hergestellt werden kann. Hierzu ist erfindungsgemäss bei einer derartigen Kältepatrone vorgesehen, dass sie durch mindestens zwei miteinander verbundene Teile gebildet ist, von welchen ein Teil aus der dem Schab- und Rührwerkzeug zugewandten Scheibenhauptwand und der andere Teil aus einem wannenförmigen Bodenteil besteht, dass die zum Zusammenwirken mit dem Schab- und Rührwerkzeug dienende Scheibenhauptwand als formstabiler Druckgussteil ausgebildet ist und dass mindestens eine Wandung des Bodenteiles sich selbst der Volumenänderung des Latentwärmespeichermittels beim Phasenübergang anpassbar ausgebildet ist. Dadurch, dass die Scheibenhauptwand, mit der das Schab- und Rührwerkzeug der Speiseeismaschine zusammenwirkt, eine stabile sich nicht ändernde Form hat, was auf einfache Weise dadurch erreicht wird, dass sie als Druckgussteil ausgebildet ist, kann das Schab- und Rührwerkzeug, dass sich an dieser Scheibenhauptwand bildende Speiseeis stets einwandfrei und gleichmässig abschaben und zusammen mit der noch nicht gefrorenen Speiseeismischung vermischen und umwälzen, was für eine qualitativ gute Herstellung des Speiseeis sehr wichtig ist. Hingegen gestattet der Bodenteil eine Volumenänderung des Latentwärmespeichermittels, wie sie bei dessen Phasenübergang zwischen flüssig und fest beziehungsweise umgekehrt auftritt, dadurch, dass sich mindestens eine Wandung des Bodenteils durch ihre Flexibilität einer solchen Volumenänderung anpassen kann, was durch eine geeignete Wahl von Formgebung, Material und Wandstärke erreichbar ist. Somit behält die mit dem Schab- und Rührwerkzeug zusammenwirkende Scheibenhauptwand stets ihre Form, wogegen Volumenänderungen des Latentwärmespeichermittels vom Bodenteil aufgefangen werden.

Es ist an dieser Stelle zu erwähnen, dass es an sich bekannt ist, bei Kältespeichern allgemeiner Art deren Wandung flexibel auszubilden, damit Volumenänderungen des Latentwärmespeichermittels beim Phasenübergang zu keiner Zerstörung des Kältespeichers führen, wie dies in der DE-OS 28 46 988 angegeben ist, wobei sich aber bei dem dort gezeigten Kältespeicher Formänderungen nicht störend bemerkbar machen, da mit keiner Wandung ein Werkzeug oder dergleichen zusammenwirkt. Um solche Volumenänderungen eine Latentwärmespeichermittels aufnehmen zu können, ist bei einer im DE-GM 84 38 146 gezeigten Speiseeismaschine auch schon vorgeschlagen worden, den an sich formstabilen Boden eines doppelwandigen, das Latentwärmespeichermittel enthaltenden Topfes über einen felxiblen Ring mit dem Gehäuse des Topfes zu verbinden, so dass die in sich steife Bodenwand als Ganzes den Volumenänderungen des Latentwärmespeichermittels nachgeben kann. Eine solche Konstruktion ist jedoch sehr aufwendig und kostspielig. Demgegenüber wird bei einer scheibenförmigen Kältepatrone durch die erfindungsgemässen Massnahmen auf sehr einfache Weise erreicht, dass die mit dem Schab- und Rührwerkzeug zusammenwirkende Scheibenhauptwand ihre Form nicht ändert und die Volumenänderung des Latentwärmespeichermittels beim Phasenübergang von mindestens einer in sich flexiblen Wand des Bodenteiles aufgenommen wird.

Für die Stabilität der Form der mit dem Schab-
und Rührwerkzeug zusammenwirkenden Scheibenhauptwand ist
beispielsweise die Wandstärke des Druckgussteiles massgebend. Als besonders vorteilhaft hat sich erwiesen, wenn
der Druckgussteil mit in das Innere der Kältepatrone vorspringenden Rippen versehen ist. Durch das Vorsehen derartiger Rippen wird die Stabilität der Form der mit dem
Schab- und Rührwerkzeug zusammenwirkenden Scheibenhauptwand ganz wesentlich erhöht, wodurch sich die Anforderungen
an die Wandstärke des Druckgussteiles verringern. Für die
Formgebung solcher Rippen bestehen verschiedene Möglichkeiten, wobei insbesondere mit radial verlaufenden Rippen
auf einfache Weise eine gute Stabilität erreicht wird;
beispielsweise könnten die Rippen aber auch eine wabenförmige Struktur haben. Solche Rippen bringen noch einen
weiteren Vorteil mit sich. Dadurch, dass die Rippen in das
Innere der Kältepatrone vorspringen, befinden sie sich
innerhalb des Latentwärmespeichermittels, wodurch sie als
Wärmeleiter vom Latentwärmespeichermittel zur mit dem
Schab- und Rührwerkzeug zusammenwirkenden Scheibenhauptwand wirksam sind und so den Wärmeaustausch zur Scheibenhauptwand begünstigen, womit eine gleichmässige Speiseeisbildung an dieser Scheibenhauptwand gefördert wird.

Weiters hat sich als vorteilhaft erwiesen, wenn
der Druckgussteil gewölbt ausgebildet ist. Durch eine solche
Wölbung wird die Stabilität der Form der mit dem Schab- und
Rührwerkzeug zusammenwirkenden Scheibenhauptwand ebenfalls
erhöht.

Beispielsweise kann die Wölbung der mit dem Schab-
und Rührwerkzeug zusammenwirkenden Scheibenhauptwand
kegelig geformt sein. Als besonders vorteilhaft hat sich
erwiesen, wenn die Wölbung des Druckgussteiles kalottenförmig ausgebildet ist. Hierdurch wird eine besonders hohe
Formstabilität erhalten.

Durch eine Wölbung der mit dem Schab- und Rührwerkzeug zusammenwirkenden Scheibenhauptwand wird aber noch ein
weiterer Vorteil erhalten. Wesentlich ist nähmlich, dass
die Kältepatrone möglichst vollständig mit dem Latent-

wärmespeichermittel gefüllt ist, damit sich in ihr keine Luftblasen befinden, die sich in der Betriebslage der Kältepatrone in der Speiseeismaschine an der mit dem Schab- und Rührwerkzeug zusammenwirkenden Scheibenhauptwand ansammeln würden, was den Wärmeübergang zwischen dem Latentwärmespeichermittel und der Scheibenhauptwand stark beeinträchtigen würde, wodurch im Bereich der Luftblasen die Speiseeisbildung behindert wäre, was keine gleichmässige Speiseeisbildung zur Folge hätte. Durch die Wölbung der Scheibenhauptwand wird nun erreicht, dass sich allenfalls doch in der Kältepatrone befindende Luftblasen sich stets an der höchsten Stelle der Kältepatrone ansammeln. Ist die Kältepatrone beispielsweise nach innen gewölbt, so sammeln sich dann allfällige Luftblasen im Bereich der Umrandung der Kältepatrone, wo sie aber nur wenig störend sind, da der andere überwiegende Bereich der Scheibenhauptwand in gutem Wärmekontakt mit dem Latentwärmespeichermittel steht und somit eine einwandfreie Speiseeisbildung gewährleistet. In diesem Zusammenhang hat sich als besonders vorteilhaft erwiesen, wenn der Druckgussteil nach aussen gewölbt ist. Auf diese Weise sammeln sich allfällige Luftblasen im Zentrum der Kältepatrone, wo das Schab- und Rührwerkzeug seine geringste Wirkung hat, so dass die Speiseeisbildung praktisch überhaupt nicht behindert ist.

Weiters hat sich als vorteilhaft erwiesen, wenn die Bodenwand im wesentlichen parallel zur Wölbung des Druckgussteiles verlaufend ausgebildet ist und in derjenigen der beiden gewölbten Wände, die nach aussen gewölbt ist, eine verschliessbare Einfüllöffnung für das Latentwärmespeichermittel vorgesehen ist. Auf diese Weise befindet sich die Einfüllöffnung beim Einfüllen des Latentwärmespeichermittels immer an der höchsten Stelle der Kältepatrone, wodurch gewährleistet ist, dass sie möglichst vollständig mit Latentwärmespeichermittel gefüllt werden kann und praktisch keine Luftblasen mehr enthält.

Für die Verbindung des Druckgussteiles mit dem wannenförmigen Bodenteil bestehen verschiedene Möglichkeiten. Wenn der wannenförmige Bodenteil beispielsweise aus einem Edelstahlblech besteht, kann eine Klebeverbindung mit einem Metallkleber gewählt werden. Als besonders vorteilhaft hat sich erwiesen, wenn der Druckgussteil im Bereich seines Umfanges mit einer dem Bodenteil zugewandten Nut versehen ist, der wannenförmige Bodenteil mit einem nach aussen abgewinkelten oberen Rand versehen ist, der passend in die Nut des Druckgussteiles eingreift und zur Verbindung des Bodenteiles mit dem Druckgussteil ein den abgewinkelten Rand des Bodenteiles übergreifender Klemmring in die Nut des Druckgussteiles eingesetzt ist. Da in einem Druckgussteil eine Nut sehr einfach herzustellen ist, ist eine solche Art und Weise der Verbindung der beiden Teile sehr einfach und sehr sicher.

Hinsichtlich der Ausbildung des Bodenteiles dahingehend, dass sich mindestens eine seiner Wandungen selbst der Volumenänderung des Latentwärmespeichermittels beim Phasenübergang reversibel anpassen kann, bestehen ebenfalls verschiedene Möglichkeiten, wobei als ein wesentlicher Parameter die Wahl der Wandstärke zu erwähnen ist. Aber auch Material und Formgebung spielen hier eine wichtige Rolle. So hat als sehr vorteilhaft erwiesen, wenn die Bodenwand des Bodenteiles mit Sicken versehen ist. Auf diese Weise wird die Bodenwand des Bodenteiles sehr gut flexibel.

Als konstruktiv und herstellungsmässig besonders einfach hat sich erwiesen, wenn der wannenförmiger Bodenteil aus elastisch nachgiebigem Kunststoff besteht. Zu erwähnen ist dabei, dass es bei Kältepatronen allgemeiner Art an sich bekannt ist, diese als Ganzes aus Kunststoff herzustellen, wie dies beispielsweise in der bereits erwähnten DE-OS 28 46 988 angegeben ist. Demgegenüber wird im vorliegenden Zusammenhang aber nur der Bodenteil einer Kältepatrone, der an sich felxibel sein soll, aus einem elastisch nachgiebigen Kunststoff hergestellt, wogegen die mit dem Schab- und Rührwerkzeug zusammenwirkende Scheibenhauptwand der Kältepatrone formstabil ausgebildet ist.

In diesem Zusammenhang hat sich weiters als vorteilhaft erwiesen, wenn der wannenförmige Bodenteil aus durchsichtigem elastisch nachgiebigem Kunsttsoff besteht. Auf diese Weise kann einfach optisch festgestellt werden, in welchem Aggregatzustand sich das Latentwärmespeichermittel innerhalb der Kältepatrone befindet, wodurch beispielsweise einfach überprüft werden kann, ob das Latentwärmespeichermittel vor der Inbetriebnahme der Kältepatrone vollständig gefroren ist.

Als vorteilhaft hat sich auch erwiesen, wenn in ihrem Inneren im Bereich der Bodenwand des Bodenteiles eine ein federnd eingeschlossenes Gas enthaltende Gasfeder angeordnet ist. Mit einer solchen, beispielsweise Luft enthaltenden Gasfeder kann ein Teil der Volumenänderungen des Latentwärmespeichermittels aufgenommen werden, wodurch an die Flexibilität des Bodenteiles nur noch geringere Anforderungen zu stellen sind, was konstruktive Vorteile mit sich bringt.

Für die Ausbildung einer derartigen Gasfeder bestehen verschiedene Möglichkeiten. So kann sie beispielsweise aus einem flachen Behälter mit flexiblen Wänden oder aus einem spiralförmig aufgewickelten, an seinen beiden Enden abgeschlossenen Gummischlauch bestehen. Als besonders einfach und vorteilhaft hat sich erwiesen, wenn die Gasfeder aus einer Zellgummischeibe besteht. Eine solche Zellgummischeibe, die beispielsweise aus Naturkautschuk oder Silikongummi mit überwiegend geschlossenen Poren besteht, ist nicht nur einfach und preiswert, sondern bietet den weiteren Vorteil, dass sie wärmedämmend wirkt, wodurch bodenseitige Wärmeverluste der Kältepatrone vermieden werden und der Wärmeaustausch zur mit dem Schab- und Rührwerkzeug zusammenwirkenden Scheibenhauptwand begünstigt und damit die Speiseeisbildung an dieser Scheibenhauptwand gefördert wird.

Als vorteilhaft hat sich auch erwiesen, wenn im Zentrum des Druckgussteiles ein Gegenlager für das Schab- und Rührwerkzeug der Speiseeismaschine vorgesehen ist und dieses Gegenlager durch einen gegenüber dem Druckgussteil erhabenen, als Handgriff verwendbaren Teil gebildet ist. Ein solches, an sich aus dem bereits erwähnten DE-GM 84 38 146 bekanntes, dort als Vertiefung ausgebildetes Gegenlager für das Schab- und Rührwerkzeug gewährleistet
ein sicheres Zusammenwirken desselben mit der Kältepatrone,
wobei im vorliegenden Fall, dadurch dass dieses Gegenlager
durch einen gegenüber dem Druckgussteil erhabenen Teil
gebildet ist, noch der Vorteil erhalten wird, dass dieser
Teil als Handgriff verwendet werden kann, so dass sich das
Hantieren der Kältepatrone besonders einfach gestaltet,
dies insbesondere beim Einlegen der Kältepatrone in die
Speiseeismaschine und bei ihrem Herausnehmen aus derselben.

In diesem Zusammenhang hat sich als besonders vorteilhaft erwiesen, wenn das Gegenlager als verschliessbare
Einfüllöffnung für das Latentwärmespeichermittel ausgebildet ist. Auf diese Weise erübrigt sich das Vorsehen einer
separaten Einfüllöffnung und diese kann so hoch gelegt
werden, dass die Kältepatrone möglichst vollständig mit
Latentwärmespeichermittel füllbar ist.

Weiters hat sich als vorteilhaft erwiesen, wenn
das Verhältnis der Oberfläche der zum Zusammenwirken mit
dem Schab- und Rührwerkzeug dienenden Scheibenhauptwand in
$cm^2$ zum Volumen des Latentwärmespeichermittels in $cm^3$ im
Bereich zwischen 0,3 und 0,6 liegt. Bei einer derartigen
Dimensionierung der Kältepatrone ergibt sich ein guter
Wärmeübergang vom Latentwärmespeichermittel zu der mit dem
Schab- und Rührwerkzeug zusammenwirkenden Scheibenhauptwand, wodurch eine gleichmässige Bildung des Speiseeises
erhalten wird.

In diesem Zusammenhang hat sich als besonders vorteilhaft erwiesen, wenn das Verhältnis der Oberfläche der
zum Zusammenwirken mit dem Schab- und Rührwerkzeug dienenden Scheibenhauptwand in $cm^2$ zum Volumen des Latentwärmespeichermittels in $cm^3$ 0,34 bis 0,39 ist. Hierdurch wird
ein besonders günstiger Wärmeübergang vom Latentwärmespeichermittel zur mit dem Schab- und Rührwerkzeug zusammenwirkenden Scheibenhauptwand erhalten, wobei die Speiseeisbildung weder zu schnell noch zu langsam erfolgt, wodurch erreicht ist, dass weder eine Klumpenbildung erfolgt,
noch die Speiseeisbildung zufolge zu grosser Wärmeverluste
unzureichend ist.

Bei den im vorstehenden beschriebenen Kältepatronen hat sich weiters als sehr zweckmässig erwiesen, wenn sie mit einem Latentwärmespeichermittel auf Basis eines eutektischen Gemisches aus Wasser und einem Salzhydrat gefüllt sind, dass zusätzlich 0,1 bis 6 Vol.% eines zweiten Wasser-Salzhydrat-Eutektikums enthält, dessen Schmelzpunkt niedriger als der des reinen Latentwärmespeichermittels ist. Solche Latentwärmespeichermittel sind aus der bereits erwähnten DE-OS 28 46 988 an sich bekannt, eignen sich aber aus der Vielzahl anderer bekannter Latentwärmespeichermittel besonders gut für die Verwendung in einer wie hier in Rede stehenden Kältepatrone für eine Speiseeismaschine, da sie eine besonders gleichmässige Ausdehnung beim Phasenübergang ergeben, wodurch die Gefahr einer Beschädigung des flexibel ausgebildeten Bodenteiles wesentlich herabgesetzt ist.

Die Erfindung wird im folgenden anhand der Zeichnungen, in welchen einige Ausführungsbeispiele der Erfindung dargestellt sind, auf die sie jedoch nicht beschränkt sein soll, näher erläutert.

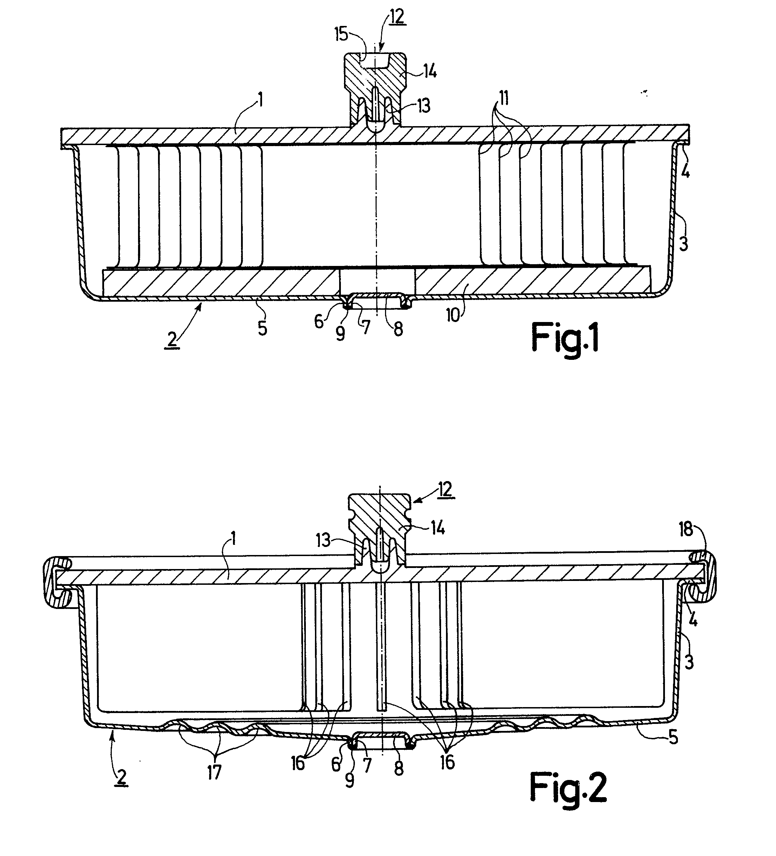

Fig. 1 zeigt eine Kältepatrone, bei der die mit dem Schab- und Rührwerkzeug zusammenwirkende Scheibenhauptwand als ebener Druckgussteil ausgebildet ist, der in seinem Zentrum mit einem als Handgriff ausgebildeten Gegenlager für das Schab- und Rührwerkzeug versehen ist.

Fig. 2 zeigt eine Kältepatrone, bei der die mit dem Schab- und Rührwerkzeug zusammenwirkende Scheibenhauptwand durch einen ebenen, mit in das Innere der Kältpatrone vorspringenden Rippen versehenen Druckgussteil gebildet ist, der in seinem Zentrum mit einem als Handgriff ausgebildeten Gegenlager für das Schab- und Rührwerkzeug versehen ist und die Bodenwand des Bodenteiles Sicken aufweist.

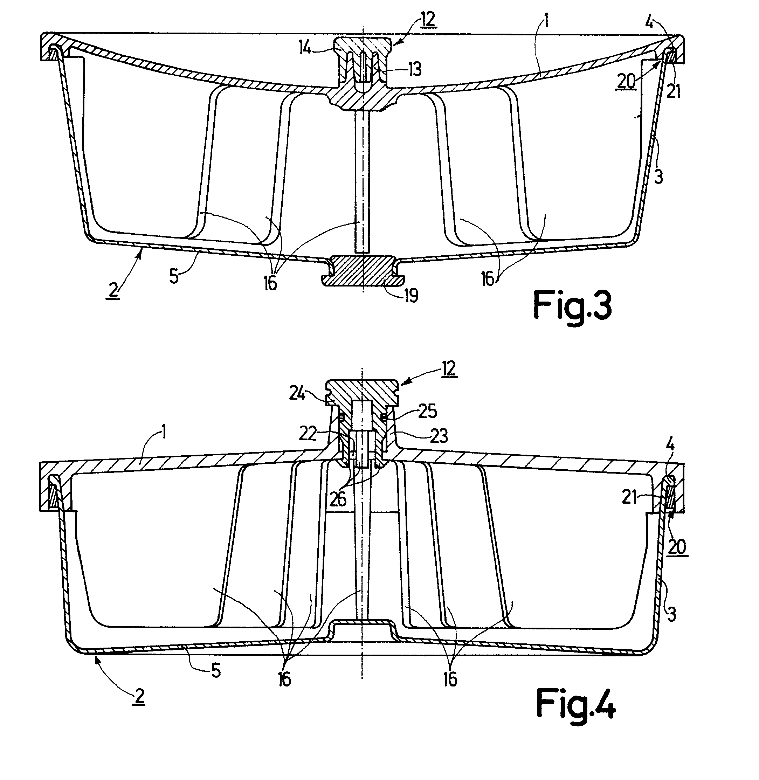

Fig. 3 zeigt eine Kältepatrone, bei der die mit dem Schab- und Rührwerkzeug zusammenwirkende Scheibenhauptwand als kalottenförmig nach innen gewölbter, mit in das Innere der Kältepatrone vorspringenden Rippen versehener Druckgussteil ausgebildet ist, der in seinem Zentrum mit einem als Handgriff ausgebildeten Gegenlager für das Schab- und Rührwerkzeug versehen ist.

Fig. 4 zeigt eine Kältepatrone, bei der die mit dem Schab- und Rührwerkzeug zusammenwirkende Scheibenhauptwand als kegelförmig nach aussen gewölbter, mit in das Innere der Kältepatrone vorspringenden Rippen versehener Druckgussteil ausgebildet ist, der in seinem Zentrum mit einem als Handgriff ausgebildeten Gegenlager für das Schab- und Rührwerkzeug versehen ist, das als verschliessbare Einfüllöffnung für das Latentwärmespeichermittel ausgebildet ist.

Die in Fig. 1 dargestellte Kältepatrone besteht aus zwei miteinander verbundenen Teilen, von welchen ein Teil die dem Schab- und Rührwerkzeug der Speiseeismaschine zugewandte Scheibenhauptwand 1 und der andere Teil ein wannenförmiger Bodenteil 2 ist. Die Scheibenhauptwand 1 ist so ausgebildet, dass sie formstabil ist, was deshalb wichtig ist, damit das Schab- und Rührwerkzeug mit ihr einwandfrei zusammenwirken kann, so dass das sich an ihr bildende Speiseeis einwandfrei und gleichmässig abgeschabt wird. Die Formstabilität wird auf einfache Weise dadurch erreicht, dass die Scheibenhauptwand 1 aus einem hier eben ausgebildeten Druckgussteil besteht. Demgegenüber ist der wannenförmige Bodenteil 2 so ausgebildet, dass mindestens eine seiner Wandungen flexibel ist, damit sich der Bodenteil Volumenänderungen eines in die Kältepatrone eingefüllten Latentwärmespeichermittels beim Phasenübergang desselben zwischen flüssig und fest beziehungsweise umgekehrt reversibel anpassen kann und somit nicht die Scheibenhauptwand 1 verformt wird. Solche Volumenänderungen können mehrere Volumen-Prozent betragen, so dass der Bodenteil dementsprechend flexibel auszubilden ist, was durch eine relativ dünne Wandstärke beziehungsweise entsprechende Formgebung erreicht wird. Als Materialien für den Bodenteil eignen sich dabei sehr gut Bleche aus Edelstahl, beispielsweise Chromnickelstahl, die korrosionsfest sind und sich gut tiefziehen und schweissen lassen, wobei die Wandstärke beispielsweise mit 0,8 mm gewählt werden kann, um die gewünschte Flexibilität zu gewährleisten. Als Materialien für den Druckgussteil werden zweckmässigerweise Aluminium oder Aluminiumlegierungen, wie mit Silicium oder Magnesium, gewählt, da diese Materialien lebensmittelecht sind, wobei die Wandstärke beispielsweise mit 3 mm gewählt werden kann, um die gewünschte Formstabilität zu erhalten. Wenn die Korrosionsfestigkeit eines solchen Druckgussteiles, insbesondere dem Latentwärmespeichermittel gegenüber, noch erhöht werden soll, kann er mit einer Lackierung versehen werden.

Der wannenförmige Bodenteil 2 weist am oberen Ende seiner umfangsseitigen Wandung 3 einen nach aussen abgewinkelten Rand 4 auf, an dem der die Scheibenhauptwand 1 bildende Druckgussteil im Bereich seines Umfanges zur Anlage gebracht wird. Die Verbindung der beiden Teile erfolgt hier beispielsweise mit einem Metallkleber, der auf den abgewinkelten Rand 4 beziehungsweise den Umfangsbereich des Druckgussteiles aufgebracht wird. In der Bodenwand 5 des Bodenteiles 2 ist eine Öffnung mit einem nach aussen umgebördelten Rand 6 vorgesehen, die zum Einfüllen des Latentwärmespeichermittels in die Kältepatrone dient. Nach dem Einfüllen dieses Latentwärmespeichermittels wird diese Öffnung mit einer ebenfalls einen umgebördelten Rand 7 aufweisenden Platte 8 abgeschlossen, wonach dann die freien Enden der beiden umgebördelten Ränder 6 und 7 durch eine Schweissnaht 9 miteinander verbunden werden. Wesentlich ist, dass die Kältepatrone möglichst vollständig mit Latentwärmespeichermittel gefüllt ist, damit sie keine Luftblasen enthält, die sich in der in Fig. 1 gezeigten Betriebslage der Kältepatrone an ihrer höchsten Stelle ansammeln würden, was im Bereich der Scheibenhauptwand 1 wäre. Solche Luftblasen würden den Wärmeübergang zwischen dem Latentwärmespeichermittel und der Scheibenhauptwand 1 wesentlich beeinträchtigen, was zu einer ungleichmässigen Speiseeisbildung an der Scheibenhauptwand 1 führen würde. Zu erwähnen ist, dass der Bodenteil 2 selbstverständlich nicht zwingenderweise als ein einziger Teil ausgebildet sein muss, sondern dass er auch aus mehreren Teilen zusammengesetzt sein könnte, beispielsweise aus einer eigenen umfangsseitigen Wandung 3 und einer separaten Bodenwand 5, die dann mit einer Schweissverbindung zu einem wannenförmigen Bodenteil 2 verbunden werden könnten.

Im Inneren der Kältepatrone ist im Bereich der Bodenwand 5 des Bodenteiles 2 eine Gasfeder angeordnet, die hier als Zellgummischeibe 10 ausgebildet ist. Ein solche Zellgummischeibe, die beispielsweise aus Naturkautschuk oder Silikongummi mit überwiegend geschlossenen Poren besteht, hat die Eigenschaft, dass sie elastisch nachgiebig und damit in der Lage ist, einen Teil der Volumenänderung des Latentwärmespeichermittels beim Phasenübergang aufnehmen zu können, wodurch sich die Anforderungen an die Flexibilität des Bodenteiles 2 verringern. Ausserdem wirkt eine solche Zellgummischeibe wärmedämmend, wodurch bodenseitige Wärmeverluste verringert werden, was die Speiseeisbildung an der Scheibenhauptwand 1 fördert.

Für die Ausbildung einer solchen ein federnd eingeschlossenes Gas enthaltenden Gasfeder bestehen natürlich auch noch andere Ausführungsmöglichkeiten. Auf einfache Weise kann eine solche Gasfeder beispielsweise auch aus einem flachen Behälter mit flexiblen Wänden bestehen. Als einfach hat sich auch erwiesen, wenn die Gasfeder aus einem spiralförmig aufgewickelten, an seinen beiden Enden abgeschlossenen Gummischlauch besteht. Solche Gasfedern können Luft oder ein spezielles Gas enthalten.

Als zweckmässig hat sich erwiesen, wenn das Verhältnis der Oberfläche der zum Zusammenwirken mit dem Schab- und Rührwerkzeug dienenden Scheibenhauptwand 1 in $cm^2$ zum Volumen des Latentwärmespeichermittels in $cm^3$ im Bereich zwischen 0,3 und 0,6, vorzugsweise zwischen 0,34 und 0,39, liegt. Auf diese Weise wird ein guter Wärmeübergang zwischen dem Latentwärmespeichermittel und der Scheibenhauptwand 1 erreicht, der einerseits nicht zu schnell und andererseits nicht zu langsam vor sich geht, so dass die Speiseeisbildung einwandfrei und gleichmässig erfolgt. Würde der Wärmeübergang zu schnell vor sich gehen, so könnte es zu einer Klumpenbildung von Speiseeis kommen, beziehungsweise könnte das sich bildende Speiseeis zu fest an der Scheibenhauptwand 1 anfrieren, so dass es vom Schab- und Rührwerkzeug nicht mehr einwandfrei abgeschabt werden könnte, wogegen im Falle eines zu langsamen Wärmeüberganges es zu grösseren Wärmeverlusten kommen könnte, was zur Folge haben könnte, dass nicht genügend Speiseeis gebildet wird. Als Latentwärmespeichermittel an sich hat sich als sehr zweckmässig erwiesen, wenn ein solches auf Basis eines eutektischen Gemisches aus Wasser und einem Salzhydrat verwendet wird, das zusätzlich 0,1 bis 6 Vol.% eines zweiten Wasser-Salzhydrat-Eutektikums enthält, dessen Schmelzpunkt niedriger als der des reinen Latentwärmespeichermittels ist. Solche Latentwärmespeichermittel haben insbesondere die Eigenschaft einer gleichmässigen Ausdehnung beim Phasenübergang, was im Hinblick auf die erforderliche Flexibilität des Bodenteiles 2 vorteilhaft ist, da bei einer gleichmässigen Ausdehnung die Gefahr einer Beschädigung des Bodenteiles 2 wesentlich herabgesetzt wird.

Weiters sind in Inneren der Kältepatrone noch Wärmeleitbleche 11 angeordnet, die in wärmeleitenden Kontakt mit der Scheibenhauptwand 1 stehen. Hierdruch wird in bekannter Weise der Wärmeübergang vom Latentwärmespeichermittel zur Scheibenhauptwand 1 besonders begünstigt. Beispielsweise können diese Wärmeleitbleche aus einem spiralförmig aufgewickelten Kupferband bestehen, dessen beiden Ränder abgewinkelt sind, wobei sich eine Abwinkelung an der Scheibenhauptwand 1 und die andere Abwinkelung an der Zellgummischeibe 10 abstützt. Selbstverständlich sind auch noch andere Formgebungen und Materialien für solche Wärmeleitbleche möglich, wobei aber stets wichtig ist, dass sie in gutem wärmeleitenden Kontakt mit der Scheibenhauptwand 1 stehen.

Wie Fig. 1 zeigt, ist im Zentrum der Scheibenhauptwand 1 ein durch einen gegenüber derselben erhabenen Teil gebildetes Gegenlager 12 für das Schab- und Rührwerkzeug vorgesehen. Hierzu weist der die Scheibenhauptwand 1 bildende Druckgussteil einen nach aussen gerichteten Wulst 13 auf, an dem ein im wesentlichen zylindrischer Teil 14 befestigt ist. Dieser Teil 14 ist mit einer zentralen Ausnehmung 15 versehen, die das Gegenlager 12 für ein freies
Ende des Schab- und Rührwerkzeuges bildet, so dass dieses
besonders sicher mit der Scheibenhauptwand 1 zusammenwirken kann. Wie ersichtlich, ist der erhabene Teil 14 als
Handgriff verwendbar, wodurch die Kältepatrone einfach zu
hantieren ist, insbesondere beim Einsetzen in die Speiseeismaschine beziehungsweise beim Herausnehmen aus derselben.

Beim Ausführungsbeispiel nach Fig. 2 ist die Scheibenhauptwand 1 wieder durch einen ebenen Druckgussteil
gebildet, der hier jedoch mit mehreren in das Innere der
Kältepatrone vorspringenden Rippen 16 versehen ist. Diese
Rippen 16 sind radial ausgerichtet und winkelversetzt angeordnet. Auf diese Weise wird eine besonders hohe Formstabilität des Druckgussteiles und damit der mit dem Schab-
und Rührwekzeug zusammenwirkenden Scheibenhauptwand 1 erreicht. Falls erwünscht, könnten diese Rippen noch mit
weiteren ringförmigen Rippen zu einer wabenförmigen Struktur ergänzt werden, wodurch die Formstabilität noch weiter
erhöht werden könnte. Das Vorsehen solcher in das Innere
der Kältepatrone vorspringender Rippen ergibt noch einen
weiteren Vorteil dahingehend, dass sie eine Wärmeleitung
vom Latentwärmespeichermittel, in das sie hineinreichen,
zur Scheibenhauptwand 1 bewirken und so den Wärmeaustausch
zur Scheibenhauptwand begünstigen, womit eine einwandfreie
und gleichmässige Speiseeisbildung an dieser Scheibenhauptwand 1 gefördert wird. Da diese Rippen 16 mit der
Scheibenhauptwand 1 einen einzigen Teil, nämlich den
Druckgussteil, bilden, ist der Wärmeübergang von den Rippen zur Scheibenhauptwand besonders gut.

Beim vorliegenden Ausführungsbeispiel ist die
Bodenwand 5 des wannenförmigen Bodenteils 2 mit Sicken 17
versehen, wodurch erreicht wird, dass die Bodenwand 5
besonders gut reversibel nachgiebig ist. Falls erwünscht,
könnte beispielsweise auch die umfangsseitige Wandung 3
des Bodenteiles 2 als gewellter Federbalg ausgebildet
werden, wodurch sich ebenfalls die Flexibilität des Bodenteiles 2 erhöhen würde, da dann der gesamte Bodenteil 2 höhenmässig flexibel wäre. Zur Verbindung des Bodenteiles
2 mit dem die Scheibenhauptwand 1 bildenden Druckgussteil
ist hier ein in seinem Querschnitt U-förmiger Klemmring
18 vorgesehen, der den an der umfangsseitigen Wandung 3
des Bodenteiles 2 vorgesehenen abgewinkelten Rand 4 und
den Druckgussteil in seinem Umfangsbereich umfasst und
gegeneinander gedrückt hält.

Im Zentrum der Scheibenhauptwand 1 ist wieder ein
als Handgriff ausgebildetes Gegenlager 12 für das Schab-
und Rührwerkzeug vorgesehen, das aus einem im wesentlichen
zylindrischen Teil 14 besteht, wobei aber hier dessen Umfangsfläche das Gegenlager 12 bildet. Zu einem solchen
Gegenlager 12 ist am der Scheibenhauptwand 1 zugewandten
Ende des zentralen Teiles des Schab- und Rührwerkzeuges
der Speiseeismaschine eine zum zylindrischen Teil 14 des
Gegenlagers 12 korrespondierende Vertiefung vorzusehen.
Durch eine solche Lagerung des Schab- und Rührwerkzeuges
im Bereich der Kältepatrone ist wieder sichergestellt,
dass das sich an der Scheibenhauptwand 1 bildende Speiseeis einwandfrei und gleichmässig vom Schab- und Rührwerkzeug abgeschabt wird.

Beim Ausführungsbeispiel nach Fig. 3 ist der die
mit dem Schab- und Rührwerkzeug zusammenwirkende Scheibenhauptwand 1 bildende Druckgussteil nach innen gewölbt ausgebildet, wobei die Wölbung Kalottenform aufweist.
Weiters ist der Druckgussteil wieder mit in das Innere
der Kältepatrone vorspringenden Rippen 16 versehen. Auf
diese Weise wird eine besonders hohe Formstabilität der
mit dem Schab- und Rührwerkzeug zusammenwirkenden Scheibenhauptwand 1 erreicht, wobei die Rippen 16 wieder für
einen guten Wärmeübergang vom Latentwärmespeichermittel
zur Scheibenhauptwand 1 sorgen. Im Zentrum ist der Druckgussteil mit einem als Handgriff verwendbaren Gegenlager
12 versehen, das analog zu demjenigen nach dem Ausführungsbeispiel von Fig. 2 ausgebildet ist.

Der wannenförmige Bodenteil 2 ist hier mit einer
kegelförmig nach aussen gewölbten Bodenwand 5 versehen,
die damit im wesentlichen parallel zur Wölbung des Druckgussteiles verläuft. Im Zentrum dieser Bodenwand 5 ist eine mit einem Stöpsel 19 verschliessbare Einfüllöffnung für das Latentwärmespeichermittel vorgesehen, die damit beim Einfüllen des Latentwärmespeichermittels an der höchsten Stelle der Kältepatrone liegt, so dass diese möglichst vollständig gefüllt werden kann und damit praktisch keine Luftblasen enthält. Sollten doch noch Luftblasen sich innerhalb der Kältepatrone befinden, so ergibt die an sich zur Erhöhung der Stabilität vorgesehene Wölbung des die Scheibenhauptwand 1 bildenden Druckgussteiles einen weiteren Vorteil, weil sich solche Luftblasen an der höchsten Stelle der Wölbung ansammeln würden, was beim vorliegenden Ausführungsbeispiel im Bereich des Umfanges der Scheibenhauptwand 1 wäre, wo sie aber die Speiseeisbildung nicht wesentlich stören, da der andere überwiegende Bereich der Scheibenhauptwand 1 in gutem Wärmekontakt mit dem Latentwärmespeichermittel steht und somit eine einwandfreie Speiseeisbildung gewährleistet.

Der Bodenteil 2 könnte beispielsweise wieder aus einem Edelstahlblech bestehen. Als sehr einfach und vorteilhaft hat sich jedoch erwiesen, wenn der Bodenteil 2 aus einem elastisch nachgiebigem Kunststoff hergestellt ist, wodurch eine sehr gute Nachgiebigkeit des gesamten Bodenteiles, der beispielsweise mit einer Wandstärke von 1,2 mm ausgeführt sein könnte, erreicht wird. Auf diese Weise kann sich der Bodenteil 2 sehr gut der Volumenänderung des Latentwärmespeichermittels beim Phasenübergang anpassen. Besonders vorteilhaft kann dabei ein durchsichtiger elastischer nachgiebiger Kunststoff verwendet werden, da dann optisch zu erkennen ist, in welchem Aggregatzustand sich das Latentwärmespeichermittel befindet. Beispielsweise kann dann einfach festgestellt werden, ob das in der Kältepatrone enthaltene Latentwärmespeichermittel vollständig gefroren ist und die Kältepatrone damit zur Speiseeisherstellung betriebsbereit ist.

Die umfangsseitige Wandung 3 des Bodenteiles 2 ist an ihrem oberen Ende wieder mit einem nach aussen abgewinkelten Rand 4 versehen, der zur Verbindung mit dem die Scheibenhauptwand 1 bildenden Druckgussteil dient. Hierzu weist der Druckgussteil im Bereich seines Umfanges eine dem Bodenteil 2 zugewandte Nut 20 auf, in die der Rand 4 passend eingreift. In die Nut 20 wird dann ein Klemmring 21 eingesetzt, der den Rand 4 des Bodenteiles 2 übergreift, wodurch eine einfache und stabile Verbindung zwischen dem Bodenteil und dem Druckgussteil hergestellt ist.

Beim Ausführungsbeispiel nach Fig. 4 ist der die Scheibenhauptwand 1 bildende, wieder mit in das Innere der Kältepatrone vorspringenden Rippen 16 versehene Druckgussteil kegelförmig nach aussen gewölbt. Eine derart geformte Wölbung bietet, abgesehen von der Erhöhung der Formstabilität des Druckgussteiles, den Vorteil, dass sich gegebenenfalls in der Kältepatrone befindende Luftblasen im Zentrum der Scheibenhauptwand 1 ansammeln, wo sie aber für die Speiseeisbildung nicht störend sind, da dort das Schab- und Rührwerkzeug seine geringste Wirkung hat und damit keine Speiseeisbildung erfolgt. Die Bodenwand 5 des vorzugsweise wieder aus elastisch nachgiebigem Kunststoff hergestellten Bodenteiles 2 ist bei diesem Ausführungsbeispiel nach innen gewölbt, wodurch eine sehr gute Flexibilität des Bodenteils 2 erreicht wird, da eine derart geformte Bodenwand der Volumenänderung des Latentwärmespeichermittels beim Phasenübergang besonders gut folgen kann. Die Verbindung des Bodenteiles 2 mit dem die Scheibenhauptwand 1 bildenden Druckgussteiles erfolgt in analoger Weise wie beim Ausführungsbeispiel nach Fig. 3 mit einem Klemmring 21, der in eine umfangsseitige Nut 20 des Druckgussteiles eingesetzt ist, wobei er den an der umfangseitigen Wandung 3 des Bodenteiles 2 vorgesehenen abgewinkelten Rand 4 übergreift und so die beiden Teile sicher miteinander verbindet.

Im Zentrum des die Scheibenhauptwand 1 bildenden Druckgussteiles ist auch bei diesem Ausführungsbeispiel ein als Handgriff ausgebildetes Gegenlager 12 für das Schab- und Rührwerkzeug vorgesehen, das in seiner Wirkungsweise wieder demjenigen nach dem Ausführungsbeispiel von Fig. 2 entspricht. Zusätzlich ist dieses Gegenlager 12 aber hier noch als verschliessbare Einfüllöffnung für das Latentwärmespeichermittel ausgebildet. Hierzu weist der Druckgussteil in seinem Zentrum eine Öffnung 22 und einen nach aussen gerichteten Stutzen 23 auf, dessen Öffnung mit einem Stöpsel 24 verschliessbar ist, der mit seiner ausserhalb des Stutzens 23 verlaufenden Umfangsfläche das Gegenlager 12 für das Schab- und Rührwerkzeug bildet. Zur einwandfreien Abdichtung ist in den Schaft des Stöpsels 24 noch ein Dichtungsring 25 eingesetzt. Zum Festhalten des Stöpsels 24 am Stutzen 23 dienen mehrere an ihm winkelversetzt angeordnete Haken 26, die den Rand der im Druckgussteil vorgesehenen Öffnung 22 von innen her federnd hintergreifen. Die auf diese Weise gebildete Einfüllöffnung liegt an der höchsten Stelle der Kältepatrone, wodurch sichergestellt ist, dass sie möglichst vollständig mit Latentwärmespeichermittel gefüllt werden kann.

Wie aus dem Vorstehenden ersichtlich ist, bestehen eine Reihe von Abwandlungen der beschriebenen Ausführungsbeispiele, ohne dass dabei der Rahmen der Erfindung verlassen wird. Dies gilt insbesondere hinsichtlich der Ausgestaltung des die Scheibenhauptwand 1 bildenden formstabilen Druckgussteiles und des mit demselben verbundenen, zumindest teilweise felxibel ausgebildeten wannenförmigen Bodenteiles 2.

PATENTANSPRÜCHE:

1.      Scheibenförmige, in eine Speiseeismaschine einlegbare Kältepatrone, die mit einem Latentwärmespeichermittel gefüllt ist und deren eine Scheibenhauptwand zum Zusammenwirken mit einem Schab- und Rührwerkzeug der Speiseeismaschine dient, dadurch gekennzeichnet, dass sie durch mindestens zwei miteinander verbundene Teile gebildet ist, von welchen ein Teil aus der dem Schab- und Rührwerkzeug zugewandten Scheibenhauptwand und der andere Teil aus einem wannenförmigen Bodenteil besteht, dass die zum Zusammenwirken mit dem Schab- und Rührwerkzeug dienende Scheibenhauptwand als formstabiler Druckgussteil ausgebildet ist und dass mindestens eine Wandung des Bodenteiles sich selbst der Volumenänderung des Latentwärmespeichermittels beim Phasenübergang anpassbar ausgebildet ist.

2.      Kältepatrone nach Anspruch 1, dadurch gekennzeichnet, dass der Druckgussteil mit in das Innere der Kältepatrone vorspringenden Rippen versehen ist.

3.      Kältepatrone nach Anspruch 1 oder 2, dadurch gekennzeichnet, dass der Druckgussteil gewölbt ausgebildet ist.

4.      Kältepatrone nach Anspruch 3, dadurch gekennzeichnet, dass die Wölbung des Druckgussteiles kalottenförmig ausgebildet ist.

5.      Kältepatrone nach Anspruch 3 oder 4, dadurch gekennzeichnet, dass der Druckgussteil nach aussen gewölbt ist.

6.      Kältepatrone nach einem der Ansprüche 3 bis 5, dadurch gekennzeichnet, dass die Bodenwand im wesentlichen parallel zur Wölbung des Druckgussteiles verlaufend ausgebildet ist und dass in derjenigen der beiden gewölbten Wände, die nach aussen gewölbt ist, eine verschliessbare Einfüllöffnung für das Latentwärmespeichermittel vorgesehen ist.

7. Kältepatrone nach einem der vorhergehenden Ansprüche, dadurch gekennzeichnet, dass der Druckgussteil im Bereich seines Umfanges mit einer dem Bodenteil zugewandten Nut versehen ist, dass der wannenförmige Bodenteil mit einem nach aussen abgewinkelten oberen Rand versehen ist, der passend in die Nut des Druckgussteiles eingreift und dass zur Verbindung des Bodenteiles mit dem Druckgussteil ein den abgewinkelten Rand des Bodenteiles übergreifender Klemmring in die Nut des Druckgussteiles eingesetzt ist.

8. Kältepatrone nach einem der vorhergehenden Ansprüche, dadurch gekennzeichnet, dass die Bodenwand des Bodenteiles mit Sicken versehen ist.

9. Kältepatrone nach einem der vorhergehenden Ansprüche, dadurch gekennzeichnet, dass der wannenförmige Bodenteil aus elastisch nachgiebigem Kunststoff besteht.

10. Kältepatrone nach Anspruch 9, dadurch gekennzeichnet, dass der wannenförmige Bodenteil aus durchsichtigem elastisch nachgiebigem Kunststoff besteht.

11. Kältepatrone nach einem der vorhergehenden Ansprüche, dadurch gekennzeichnet, dass in ihrem Inneren im Bereich der Bodenwand des Bodenteiles eine ein federnd eingeschlossenes Gas enthaltende Gasfeder angeordnet ist.

12. Kältepatrone nach Anspruch 11, dadurch gekennzeichnet, dass die Gasfeder aus einer Zellgummischeibe besteht.

13. Kältepatrone nach einem der vorhergehenden Ansprüche, dadurch gekennzeichnet, dass im Zentrum des Druckgussteiles ein Gegenlager für das Schab- und Rührwerkzeug der Speiseeismaschine vorgesehen ist und dass dieses Gegenlager durch einen gegenüber dem Druckgussteil erhabenen, als Handgriff verwendbarer Teil gebildet ist.

14. Kältepatrone nach Anspruch 13, dadurch gekennzeichnet, dass das Gegenlager als verschliessbare Einfüllöffnung für das Latentwärmespeichermittel ausgebildet ist.

15. Kältepatrone nach einem der vorhergehenden Ansprüche, dadurch gekennzeichnet, dass das Verhältnis der Oberfläche der zum Zusammenwirken mit dem Schab- und Rühr-

werkzeug dienenden Scheibenhauptwand in $cm^2$ zum Volumen des Latentwärmespeichermittels in $cm^3$ im Bereich zwischen 0,3 und 0,6 liegt.

16.    Kältepatrone nach Anspruch 15, dadurch gekennzeichnet, dass das Verhältnis der Oberfläche der zum Zusammenwirken mit dem Schab- und Rührwerkzeug dienenden Scheibenhauptwand in $cm^2$ zum Volumen des Latentwärmespeichermittels in $cm^3$ 0,34 bis 0,39 ist.

17.    Kältepatrone nach einem der vorhergehenden Ansprüche, dadurch gekennzeichnet, dass sie mit einem Latentwärmespeichermittel auf Basis eines eutektischen Gemisches aus Wasser und eunem Salzhydrat gefüllt ist, das zusätzlich 0,1 bis 6 Vol.% eines zweiten Wasser-Salzhydrat-Eutektikums enthält, dessen Schmelzpunkt niedriger als der des reinen Latentwärmespeichermittels ist.

Fig.1

Fig.2

Fig.3

Fig.4